Europäisches Patentamt

European Patent Office

Office européen des brevets

(11) Publication number: **0 243 123**
**B1**

(12) **EUROPEAN PATENT SPECIFICATION**

(45) Date of publication of patent specification: 31.10.90

(21) Application number: 87303421.9

(22) Date of filing: 16.04.87

(60) Divisional application 89124021.0 filed on 16/04/87.

(51) Int. Cl.⁵: **C 04 B 35/10,** C 03 B 37/00, C 03 C 13/00, D 03 D 15/12, B 32 B 17/02, C 03 C 25/02

(54) Refractory fibers of amorphous alumina and phosphorus pentoxide.

(30) Priority: 21.04.86 US 854319

(43) Date of publication of application: 28.10.87 Bulletin 87/44

(45) Publication of the grant of the patent: 31.10.90 Bulletin 90/44

(84) Designated Contracting States: DE FR GB IT

(56) References cited:
GB-A-1 360 200
US-A-3 503 765
US-A-3 982 955

(73) Proprietor: MINNESOTA MINING AND MANUFACTURING COMPANY
3M Center, P.O. Box 33427
St. Paul Minnesota 55133 (US)

(72) Inventor: Sowman, Harold G. c/o Minnesota Mining and
Manufacturing Company 2501 Hudson Road
St. Paul Minnesota 55144-1000 (US)
Inventor: Tran, Tai T. c/o Minnesota Mining and
Manufacturing Company 2501 Hudson Road
St. Paul Minnesota 55144-1000 (US)

(74) Representative: Baillie, Iain Cameron et al
c/o Ladas & Parry Isartorplatz 5
D-8000 München 2 (DE)

Courier Press, Leamington Spa, England.

EP 0 243 123 B1

**Description**

Field of the invention

This invention relates to refractory fibers of alumina and phosphorus pentoxide and articles made therefrom. In another aspect, it relates to a process for the preparation of such refractory fibers. The fibers are useful in the manufacture of fire-resistant materials.

Background art

Ceramic fibers containing aluminum/phosphorus components are known in the art. They are known to be crystalline in structure which accounts for their friability. These fibers are not well suited for the manufacture of textile fabrics.

Ceramic fibers containing phosphates of aluminum have been disclosed. U.S. Patent No. 4,008,299 teaches essentially crystalline filaments of aluminum phosphate. Various additives can provide some non-crystalline character. U.S. Patent No. 3,788,885 discloses a process for binding inorganic fibrous materials which comprises applying a solution of a complex phosphate of aluminum to a fibrous material.

Polycrystalline oxide fibers, including $Al_2O_3 \cdot P_2O_5$, which melt above 1600°C are disclosed in U.S. Patent No. 3,322,865.

$P_2O_5$ can be present as an additive in ceramic fibers. For example, polycrystalline alumina-silica fibers having as an additive 1 to 9% $P_2O_5$ are disclosed in U.S. Patent No. 3,503,765. An alumina fiber having $P_2O_5$ present as an additive is taught in U.S. Patent No. 3,950,478.

GB—A—1,360,200 discloses a fiber comprising a metal compound and polyvinyl alcohol or partially hydrolyzed polyvinyl acetate and a process therefor.

U.S.—3,982,955 discloses aluminium oxide fibers having the following composition by weight:

| | |
|---|---|
| $Al_2O_3$ | 61—98% (preferably 76—96%) |
| $SiO_2$ | 1—20% (preferably 3—15%) |
| $P_2O_5$ | 0—10% (preferably 0—5%) |
| $B_2O_3$ | 0—10% (preferably 0—5%) |
| MgO | 0—5% (preferably 0—1%) |
| C | 0.1—4% (preferably 0.5—2.8%) |

The fibers are formed by spinning a low viscosity solution containing polyethylene oxide (having a viscosity typically of the order of 270 mPas) through a heated spinning column (in which solvent is evaporated) and heating the resulting green fibers in air to drive off organic matter. The resulting fibers have an irregular cross-section. If the final heat treatment step is carried out at a temperature below 1,100°C, carbon remains in the fiber and the resulting carbon-containing filaments are stated to be amorphous to X-rays and to possess good mechanical properties. However the only amorphous fiber specifically disclosed (in Example 4) is composed of alumina, silica and carbon only and has the same tensile strength but a lower modulus than that of a comparable crystalline fiber.

Summary of the invention

The present invention provides a refractory fiber consisting essentially of a homogeneous mixture of amorphous alumina and amorphous phosphoros pentoxide, the mole ratio of alumina to phosphorus pentoxide being in the range of 10:1 to 2:1, and said fiber being of uniform shape.

The alumina-phosphorus pentoxide fibers of the invention are typically solid, smooth, and can be transparent to visible light. The fired alumina-phosphorus pentoxide fibers of the present invention have unusual textile handling properties in that they can be repeatedly rubbed between the fingers with little evidence of friability and are useful for the manufacture of fireproof fabrics. The fibers can be modified by the addition of small amounts of additives to the precursor composition such as polyvinylpyrrolidone to provide softer fiber or other oxide components to produce a variety of colors. These physical characteristics are in contrast to those fibers disclosed in the prior art which are crystalline in structure. The crystalline fibers of the prior art can be friable and are not as well suited for the manufacture of textile fabrics. The fabrics prepared from fibers of the present invention are particularly well suited for consumer textiles rather than solely industrial applications as are crystalline fiber fabrics.

The invention also provides a method for preparing a refractory fiber having a homogeneous composition consisting essentially of amorphous alumina and amorphous phosphorus pentoxide, the mole ratio of alumina to phosphorus pentoxide being in the range of 10:1 to 2:1, comprising the steps:

a) preparing a viscous precursor liquid mixture comprising an alumina precursor and a phosphorus pentoxide precursor having an oxide solid content in the range of 25 to 55 weight percent and a viscosity in the range of 10 to 1,000 Pas,

b) shaping said viscous concentrate in a fiber form by drawing or spinning, and

c) evaporatively gelling or hydrolyzing the resultant formed fiber to provide a green fiber comprising said homogeneous composition of alumina and phosphorus pentoxide, and

d) firing said green fiber to a temperature of at most 1000°C and for a time sufficient to provide a fired fiber consisting essentially of a homogeneous mixture of amorphous alumina and amorphous phosphorus pentoxide, said temperature and time being insufficient to provide a polycrystalline fiber.

Heating and firing the shaped green fiber in step d) of the above process removes water, decomposes and volatilizes undesired fugitive constituents, and converts it into the refractory fiber of the invention.

In this application:

"ceramic" means inorganic nonmetallic material consolidated by the action of heat, such as metal and nonmetal oxides;

"sol" means a fluid solution or a colloidal suspension;

"non-melt" means that the mixture is not melted although one of the components may be;

"homogeneous" means of uniform composition;

"non-vitreous" means not formed from a melt of the oxide mixture;

"green" refers to the ceramic articles which are unfired, that is, not in their final ceramic form;

"amorphous" means a material having a diffuse x-ray diffraction pattern without definite lines to indicate the presence of a crystalline component;

"refractory" means resistant to high temperatures, e.g., up to 900—1000°C;

"dehydrative gelling" or "evaporative gelling" mean that sufficient water and volatile material are removed from the shaped green fibers so that the form or shape of the fiber is sufficiently rigid to permit handling or processing without significant loss or distortion of the desired fibrous form or shape. Therefore, all the water in the shaped fiber need not be removed. Thus, in a sense, this step can be called partial dehydrative gelling. The shaped fibers in their green form are generally transparent to visible light and clear under an optical microscope;

"continuous fiber" means a fiber (or multi-fiber article such as a strand) which has a length which is infinite for practical purposes as compared to its diameter;

Detailed description

To prepare the fibers of the invention, aluminum and phosphorus-containing compounds which can contain soluble salts, sols or dispersible colloids or mixtures are mixed together with other optional components, such as polyvinylpyrrolidone or precursors of oxides such as copper, iron, nickel, chromium, etc. for color or other property modifications to form a homogeneous liquid precursor mixture. The components are concentrated to a fiber-forming consistency (i.e., when a rod is inserted and pulled out, a fiber is formed), by evaporation of solvent or removal of solvent from the precursor liquid mixture. To facilitate spinning of continuous fibers it is preferable that the concentrate has a viscosity in the range of 50,000 to 100,000 mPas. For spinning of staple form fibers (as by use of spinning discs or blowing processes) much lower viscosities, i.e., down to 10,000 mPas, are usable. Drying or removal of at least part of the water from the shaped fiber causes it to gel or become rigid. The resulting shaped "green" or non-refractory amorphous fiber can be further heated and fired at temperatures up to 1000°C (higher temperatures result in the formation of phosphates of aluminum) which removes the remaining water, decomposes and volatilizes the undesired fugitive constituents and converts it into a refractory fiber. A particularly desirable composition comprises a molecular equivalent of 4 $Al_2O_3$:1 $P_2O_5$. At a magnification of 10,000 to 15,000 times under scanning electron microscopy, the 4 $Al_2O_3$:1 $P_2O_5$ fiber can be seen to have a thin skin or sheath of approximately 0.1 micrometer or more.

The alumina precursor useful in the present invention can for example include aluminum formoacetate or an aqueous aluminum chloride solution described below. Preferably, the alumina precursor can be prepared by digesting aluminum metal foil in hot aqueous aluminum chloride solution, the alumina equivalent of the final mixture being about 20 to 23% by weight.

The phosphorus pentoxide precursors useful in the present invention can include phosphoric acid, phosphorous acid, and ammonium hypophosphite. Commercially available 85% phosphoric acid is a preferred phosphorus pentoxide precursor. The phosphorus pentoxide precursor is added to the precursor liquid as shown in Example 1.

For high carbon content (black) fibers, polyvinylpyrrolidone (PVP), present in an amount 25 to 100 parts based on dry weight PVP to 100 parts oxide equivalent (Al&P), is a preferred carbon source. The PVP polymer serves not only as the carbon source but it is also useful as the viscosity modifier for spinning purposes. A convenient form for the addition of PVP is an aqueous solution with 50 weight percent K-30™, 40,000 molecular weight (GAF, Texas City, TX).

In terms of moles, the ratio of alumina:phosphorus pentoxide is in the range of 10:1 to 2:1 and these fibers can range in color from white to black. In order to obtain a preferred white fiber at an alumina/phosphorus mole ratio of 3:1 to 5:1 with excellent textile qualities, chloride is an important ingredient. When PVP is used and where the preferred white fiber is desired, the Cl to PVP mole ratio is at least 5.5:1 to 6:1 and may be as high as 7.5:1. The chloride source can be present in the preferred aluminum oxychloride precursor (basic aluminum chloride).

The precursor liquid used to make the refractory fibers of this invention optionally can for example also contain various other water-soluble metal compounds (calcinable to metal oxide) which will impart additional desired properties to the refractory fibers. For example, an optional component can be used to adjust refractive index, dielectric properties, or to impart, without sacrifice of clarity, an internal color to the final refractory fiber upon being converted or oxidized to the corresponding metal oxide. Thus, ferric nitrate can be added to impart an orange to gold color, chromium formate, acetate, or trioxide to impart to the

3

fibers a green color, cobalt acetate or nitrate to impart a blue or lavender color, vanadyl sulfate to impart a yellow color, and nickel acetate to impart a light green to blue color. Such colored refractory fibers are desirable for the weaving of design textile fabrics. These colored filaments are also useful for color coding in ceramic fiber articles. The ferric oxide-containing refractory can be reduced in a hydrogen atmosphere to produce a cermet, black in color and attractive to a magnet. Other optional compounds are the water soluble nitrates, formates, acetates, citrates, lactates, tartrates, or oxalates of lithium, sodium, potassium, magnesium, calcium, strontium, barium, yttrium, titanium, zirconium, chromium, manganese, iron, cobalt, nickel, copper, zinc, tin, antimony, lanthanum, and vanadium as vanadyl sulfate.

The amount of such other optional metal oxide in the refractory component can vary, depending upon the property effect desired, for example the tone of the color or hue desired, but generally will comprise an amount in the range of as low as 0.05 to 0.5 and can be as much as 25 weight percent based on the total weight of the oxide components in the refractory fiber.

Each of the fiber precursor materials initially will be a relatively dilute liquid, typically containing about 10—30 weight percent equivalent oxide, which can be calculated from a knowledge of the equivalent solids in the original materials and the amount used, or determined by calcining samples of the component starting materials. For the preparation of a fiber, it is necessary to concentrate or viscosify the dilute liquid mixture of Al and P-containing precursors in order to convert it to a viscous or syrupy fluid concentrate. The concentrate will readily gel when it is fiberized and dehydrated, for example, when the concentrate is extruded and drawn in air to form the fiber. For example, the mixture can be concentrated with a Rotavapor™ (Buchi, Switzerland) flask under vacuum. The concentration procedures are well known in the art; see for example, U.S. Pat. No. 3,795,524. Sufficient concentration will be obtained when the equivalent oxide solids content is generally in the range of 25 to 55 (as determined by calcining a sample of the concentrate), and viscosities (Brookfield at ambient room temperature) are in the range of 10,000 to 1,000,000 mPas, preferably 40,000 to 100,000 mPas, depending on the type of fiberizing or dehydrative gelling technique and apparatus used and the desired shape of the gelled fiber. High viscosities tend to result in fibers which are more circular in cross-section whereas low viscosities (e.g., less than 50,000 mPas) tend to result in fibers which are more oval or rod-like (elongated ovoid) in cross-section.

In making continuous fibers, the viscous concentrates can be extruded through a plurality of orifices (e.g., a total of 10 to 400) from a stationary head and resulting green fibers allowed to fall in the air by the force of gravity or drawn mechanically in air by means of drawing rolls or a drum or winding device rotating at a speed faster than the rate of extrusion. The concentrate can also be extruded through orifices from a stationary or rotating head and at the orifice exit blown by a parallel, oblique or tangential stream of high pressure air, such as in the making of cotton candy, the resulting blown green fibers being in essentially staple or short form with lengths generally 25 cm or less (rather than the continuous filament form) and collected on a screen or the like in the form of a mat. Any of these forces exerted on the extruded, green fibers cause attenuation or stretching of the fibers, and can reduce their diameter by about 50 to 90 percent or more and increase their length by about 300 to 1000 percent or more and serve to hasten or aid the drying of the green fibers.

The dehydrative gelling of the green fibers can be carried out in ambient air, or heated air if desired or necessary for faster drying. The drying rate assists in controlling the shape of the fiber. (It has been found that too rapid drying may cause distortion of the shape of the fiber). The relative humidity of the drying air should be controlled since excess humidity will cause the gelled green fibers to stick together and excessively dry air tends to result in fiber breakage. Generally, air with relative humidity in the range of 20 to 60 percent at an operative temperature of 15—30°C is most useful, although drying air temperatures of 70°C or more can be used. Where continuous green fibers are made and gathered together in parallel alignment or juxtaposition in the form of a multi-fiber strand, the fibers or strand should be treated with a size to prevent the fibers from sticking together.

The fibers in the green or unfired gel form are dry in the sense that they do not adhere or stick to one another or other substrates and feel dry to the touch. However, they still may contain water and organics, and it is necessary to heat and fire the green fibers in order to remove these remaining fugitive materials if an all oxide (carbon free) fiber is desired and convert the green fibers into refractory fibers. In certain cases it may be desirable to fire so as to retain carbon in the fiber, for example, to provide for a black color or for a high thermal emissivity fiber. In addition, useful fibers are also obtained when only part of the organics (organic residues) are removed to result in very flexible organic-inorganic hybrid fibers. As much as 25 weight percent of the fired fiber may be organic residues (e.g., C, H, O, N, etc).

The green fibers in their continuous form are preferably gathered or collected in the form of a strand, the strand then being accumulated in a relaxed, loose, unrestrained configuration of offset or superimposed loops as in a "figure 8".

In firing the green fibers, care should be exercised to avoid ignition of combustible material (organics within or size upon the fiber) in or evolved from the fibers resulting in an improper rate of temperature rise of the firing cycle. Such overfiring or rapid rate of heating may result in frangible fibers. The most satisfactory schedule for firing and atmosphere control to avoid over-firing can be determined empirically.

The present invention typically provides continuous uniformly round, oval, rod-like (elongated ovoid) or ribbon-like, strong, flexible, smooth, glossy refractory amorphous fibers. The fibers of this invention are particularly useful in making ceramic fiber textiles not only having utility in the 500—1000°C temperature range, but also in fire-resistant materials such as upholstery fabrics. The fabrics of the instant invention are also useful in combination with polymeric materials, for example, clear vinyls for upholstery fabrics. The fibers are also useful as fillers and reinforcement for plastic composites.

Objects and advantages of preferred embodiments of this invention are further illustrated. In the following examples all percents and parts are by weight unless otherwise stated.

In the Examples below:

"22.69 wt% alumina sol" is the Al-aluminum chloride sol prepared by digesting aluminum foil (Kaiser Aluminum Co.) in the solution of $AlCl_3 \cdot 6H_2O$ which was dissolved in deionized water then heated to about 85—90°C and maintained at this temperature until all of the foil was completely digested.

The "20.5 wt% alumina sol" is also an Al-AlCl₃ sol, prepared as above, but the aluminum foil was made by Reynolds Aluminum Co.

The PVP[K-30] is a 50% aqueous solution prepared by dissolving the PVP[K-30] powder in deionized water in a 1:1 weight ratio. In all examples, PVP is shown as that amount added to 100 parts equivalent oxide composition of the fired fibers.

## Example 1

An alumina precursor was made by digesting aluminum metal foil in hot aqueous aluminum chloride solution. To 196.5 grams of the alumina precursor containing an equivalent of 40.9 grams of $Al_2O_3$ was added 23.1 grams of 85% phosphoric acid. The final mixture had an alumina equivalent of 18.6 wt%. To this liquid mixture, 36.6 grams of a 50 weight percent aqueous solution of polyvinylpyrrolidone (K-30) was added with stirring. The fiber precursor comprised 3 parts by weight of a molecular equivalent of 4 $Al_2O_3$: 1 $P_2O_5$ and 1 part by weight of PVP (dry basis).

The resultant dispersion was filtered through a 0.3 micrometer Balston™ cartridge filter (Balston, Inc., Lexington, MA) and concentrated in a Rotavapor flask to a viscosity measured to be 68,000 mPas Brookfield. The concentrate was spun through a 30 hole spinnerette having 102 micrometer diameter holes and using a pressure of 1.38 MPa (200 psi) [1 psi=6900 Pa]. The filaments were drawn downward at a linear rate of 82.2 meters/min (270 ft/min) through a vertical cylinder 1.2 meters (4 ft) long by 17.8 cm (7 inches) diameter. Dry room temperature air was passed upward through the cylindrical stack at about 1.42 L/sec (3 cfm). Infra red lamps were directed at the fibers as they were collected on a 61 cm (24 inch) drum to assist sufficient drying to prevent the fibers from sticking together.

A part of the fiber bundle which was cut at one point, was removed from the drum and was suspended in a 50°C oven for further drying. These fibers which were dried at fifty degrees were divided into five parts and fired from 50°C to various higher temperatures. The resulting data are tabulated in Table I, below.

TABLE I

| Temperature | Time to reach temp. from room temp. | Results |
|---|---|---|
| 600°C | 1 hour | clear gold 10 micrometer dia. strong, shiny, smooth, soft, and transparent |
| 700 | 1 hr., 20 min. | off-white, otherwise like 600°C fibers |
| 800 | 1 hr., 35 min. | slightly off-white, otherwise like above |
| 900 | 2 hours | white to the eye, otherwise as above |
| 1000 | 2 hrs., 30 min. | white, translucent, dull, weak and friable |

X-ray diffraction data indicated that all the fibers fired at temperatures ranging from 600 to 900°C were amorphous. The fibers which were fired at 1000°C were crystallized to $AlPO_4$ and eta or gamma alumina. The tensile strength of the 900°C fibers was 1.3 GPa (190,000 psi) and the modulus of elasticity was 135 GPa (19.5 million psi).

## Example 2

98 weight percent colored $Al_2O_3$—$P_2O_5$ fibers (4 $Al_2O_3$:1 $P_2O_5$)+2% CoO

In a 100 ml beaker, the following materials were mixed together using a magnetic stirrer.

1. 37.41 g Al-AlCl₃ sol*
2. 4.2 g $H_3PO_4$
3. 6.0 g PVP (K-30), 50% by wt. aqueous solution, so as to provide 3 g PVP or 30 parts PVP to 100 parts oxide equivalent
4. 0.67 g $Co(CH_3COO)_2 \cdot 4 H_2O$ dissolved in 30 mL deionized water.

* Al-AlCl₃ sol is made by digesting Al foil in hot aqueous solution (85—90°C) of AlCl₃. The $Al_2O_3$ equivalent was 19.8% by wt.

5

The resulting mixture was pressure-filtered at 0.1—0.14 MPa (15 to 20 psi) through a 0.3 micrometer Balston filter cartridge and a 1 micrometer Millipore™ filter (Millipore Corp., Bedford, MA) into a 100 mL round bottom flask. The mixture was then concentrated in a rotating evacuated flask (40°C water bath and 28—29 inches [711—737 mm Hg vacuum]) to a viscosity of about 75,000—80,000 mPas. This clear pinkish-blue sol concentrate was extruded through a 102 micrometer diameter-80 hole spinnerette at 1.04 MPa (150 psi). Fibers were drawn downward and collected on a wheel at a linear speed of 80 fpm [24 meters/min]. The spinning chamber was heated by heat lamps mounted along the falling path of fibers. The ambient relative humidity was about 45—50%.

The bright blue fibers obtained were fired from room temperature to 600°C in 1 hour; 600—700°C in 20 minutes; 700—800°C in 15 minutes, then cooled to about 500°C. The fired fibers were removed from the furnace. The fibers were light blue in color and transparent. They were soft textured, strong, shiny and smooth.

Example 3

Using the procedure of Example 2, to 71.08 g (19.83 percent alumina equiv.) of a mixture of Al-AlCl$_3$ sol, and 7.97 g H$_3$PO$_4$, was added 3.34 g of nickel acetate (to give a 5% NiO equivalent) and 12.0 g of 50 wt% aqueous PVP solution. The fiber precursor was concentrated to 75—80,000 mPas and spun into fibers using the procedure of Example 2. The fibers were fired up to 800°C, then to 900°C. These fibers were brown colored and very strong with a soft texture. Some of the fibers were then fired to 1000°C. These fibers were light green in color and were very fragile/friable.

In Examples 4 to 15 alumina-phosphorus pentoxide fibers were made by the following basic procedure. The order of addition of raw materials to prepare the spinning sol is as listed. This group of samples was prepared to establish the effect of chlorine on the final product, the effect of the polyvinylpyrrolidone, molar ratios, additives, and raw material source.

Example 4
10 Al$_2$O$_3$:1 P$_2$O$_5$

In a beaker the following materials were mixed together:
1. 77.4 g of 22.69 wt% alumina sol.
2. 11.77 g concentrated HCl acid.
3. 4.0 g phosphoric acid, concentrated.
4. 12.0 g PVP [K-30] 50 percent aqueous solution.

The mixture was filtered through a 0.3 micrometer Balston cartridge filter and a 1 micrometer Millipore filter, and concentrated in a Rotovapor to a viscous sol of about 90,000 mPas. The viscous sol was then extruded through a 40-hole 102-micrometer diameter orifice spinnerette. Filaments were drawn and collected at 30 meters per minute. The extruded fibers were then fired immediately by draping them over a ceramic rod in a furnace equipped with a programmed temperature control.

The firing schedule was:
room temperature to 600°C in 1 hour,
600 to 700°C in the next 20 minutes,
700—800°C in the final 20 minutes,
then cooled to room temperature. The fired fibers were removed from the furnace, they were white, transparent and fairly strong.

Example 5
2 Al$_2$O$_3$:1 P$_2$O$_5$
1. 52 g of Al-aluminum chloride sol having an equivalent alumina content of 22.69 wt%.
2. 7.9 g of concentrated HCl
3. 13.34 g of concentrated phosphoric acid.
4. 12.0 g of 50 wt percent aqueous solution PVP [K-30].

The sol viscosity was 95,000 mPas spinning was performed in a spinnerette having forty 102-micrometer diameter orifices with a draw rate of 25 meters per minute wheel speed. The fibers were fired to 800°C and were black, shiny, soft and strong.

Example 6
98 weight percent 4 Al$_2$O$_3$:1 P$_2$O$_5$+2 weight percent iron oxide [Fe$_2$O$_3$].
1. 37.41 g Al-aluminum chloride sol [19.83 wt percent alumina]
2. 4.2 g conc. phosphoric acid
3. 6.0 g 50% aqueous PVP [K-30]
4. 0.68 g of FeCl$_3$ · 6H$_2$O was dissolved in 30 mL deionized water and then stirred into the mixture of 1—3 above.

The sol was concentrated to a viscosity of 76,000 mPas and was spun through a 40 hole spinnerette having 76 micrometer diameter orifices.

The "green" fibers were fine, curly and a light orange color. The fibers fired to 800°C were fine, curly and pinkish in color.

6

Example 7

Using the procedure of Example 4, fibers having the formulations shown in Table II were prepared with the concentrated sols having viscosities of about 100,000 mPas.

TABLE II
Chloride: PVP ratio

| Sample | Al:AlCl$_3$ sol* 20.5% Al$_2$O$_3$ | H$_3$PO$_4$ acid | HCl conc | PVP [K-30] 50% aq.soln | Cl:PVP ratio |
|---|---|---|---|---|---|
| 8A | 36.20 g | 4.2 g | 5.50 g | 6.0 g | 7:1 |
| 8B | 36.20 g | 4.2 g | 0.00 g | 4.0 g | 7:1 |

* sol from Reynolds™ Al foil

Both fibers were heat treated to 800°C at the same time in the same furnace under the same conditions. Both fibers were clear, white and soft. The 8B sample was slightly stiffer than 8A (less PVP content). As the samples aged in air, they became softer to the hand. The fired fibers had an Al$_2$O$_3$:P$_2$O$_5$ ratio of 4:1.

Examples 8—10

Using the procedure of Example 4, fibers having the formulations shown in Table III were prepared from sol concentrates having viscosities of about 100,000 mPas.

These six samples were prepared using the same amount of phosphoric acid, 8.4 g and 12.0 g of 50 percent aqueous PVP [K-30]. The data is shown in Table III below.

TABLE III
Effect of chloride content on color

| Sample | Al-AlCl$_3$ grams | HCl grams | Cl from HCl | Cl from Al-AlCl$_3$ | Total Cl moles | Color* |
|---|---|---|---|---|---|---|
| 8A | 65.4** | 3.27 | 1.16 | 8.44 | 0.270 | tan |
| 8B | 65.4** | 6.54 | 2.32 | 8.44 | 0.303 | beige |
| 9A | 72.4*** | 7.24 | 2.57 | 9.34 | 0.335 | off-white |
| 9B | 72.4*** | 3.62 | 1.29 | 9.34 | 0.300 | tan |
| 9A | 72.4*** | 5.40 | 1.92 | 9.34 | 0.317 | beige |
| 9B | 65.4** | 8.40 | 2.98 | 8.44 | 0.322 | white |

* color of fibers fired to 800°C.
** sol from Kaiser™ Al foil
*** sol from Reynolds™ Al foil
concentrated HCl (36.5%)

The data show that a mole ratio of about 5.5:1 to 6:1 Cl to PVP was required to obtain the white fibers. The mole ratio was calculated on the basis of the PVP monomeric unit of a 111 molecular weight. The molecular ratio of Al$_2$O$_3$:P$_2$O$_5$ in the fired fiber was calculated to be 4:1.

Example 11

Two alumina-phosphorus pentoxide fibers having the mol ratios shown in Table IV were prepared using the procedure of Example 4. The fibers were fired from room temperature to 800°C over a period of 1 2/3 hours. The fibers had the properties shown in Table IV below.

TABLE IV

Varying alumina-phosphorus pentoxide ratio

| Sample | Composition | Raw materials | Additive | Properties |
|---|---|---|---|---|
| 11A | 10 $Al_2O_3$:1 $P_2O_5$ (87.8:12.2 wt%) | Al-$AlCl_3$ $H_3PO_4$ | HCl 30% PVP | off-white transparent, strong |
| 11B | 2 $Al_2O_3$:1 $P_2O_5$ (59:41 wt%) | Al-$AlCl_3$ $H_3PO_4$ | HCl 30% PVP | black, shiny soft, strong |

Example 12

Three colored fiber lots were prepared using various additives and using the procedure of Example 4, in which the $Al_2O_3$:$P_2O_5$ molecular ratio was 4:1. The source of alumina was Al $AlCl_3$ sol; the source of $P_2O_5$ was $H_3PO_4$ (85%). PVP, 30% (50% aqueous solution) was added to the liquid precursor in all samples. The data is given in Table V below.

TABLE V

| Sample | Composition | Additive | Firing temp. | Properties |
|---|---|---|---|---|
| 12A | 95%, 4 $Al_2O_3$:1 $P_2O_5$ 5% NiO | nickel acetate · $4H_2O$ | 700°C 800°C 900°C 1000°C | dark brown, strong soft brown, strong brown bluish, friable |
| 12B | 98%, 4 $Al_2O_3$:1 $P_2O_5$ 2% $Fe_2O_3$ | $FeCl_3$ · $6H_2O$ | 800°C | fine, curly, pinkish |
| 12C | 98%, 4 $Al_2O_3$:1 $P_2O_5$ 2% CoO | cobalt acetate · $4H_2O$ | 800°C | blue, transparent |

Example 13

Using the procedure of Example 4, five fiber lots were prepared having varying alumina and phosphorus pentoxide sources, and with and without PVP. The data is shown in Table VI below.

### TABLE VI
#### Alumina-phosphorus pentoxide fibers

| | Ratio | Composition | | | Firing temp. | Properties |
|---|---|---|---|---|---|---|
| F | 4:1[a] | Niacet[b] | AHP[c] | No PVP[d] | 1000°C | Black, soft, strong, shiny or glossy[g] |
| G | 4:1 | Niacet | AHP | 30% PVP | 600°C<br>700°C | Black, curly<br>black, curly, weak |
| H | 4:1 | Al-AlCl$_3$[e] | H$_3$PO$_4$ | No PVP | 600°C<br>700°C | Lt. Brown, dull, weak<br>Lt. Yellow, friable |
| I | 4:1 | Al-AlCl$_3$ | H$_3$PO$_4$ | 30% PVP | 600°C[f]<br>700°C<br>800°C<br>900°C<br>1000°C | Brown, shiny, strong<br>Beige, shiny, strong<br>Off-white, shiny, strong<br>Off-white, shiny, strong<br>Off-white, shiny, strong |
| J | 4:1 | Al-AlCl$_3$ | H$_3$PO$_4$ | 100% PVP | 700°C<br>800°C | Black, shiny, strong<br>Black, shiny, strong |

[a] 4:1 ratio is 4 Al$_2$O$_3$:1 P$_2$O$_5$
[b] Niacet: aluminum formoacetate
[c] AHP; ammonium hypophosphite
[d] PVP: polyvinylpyrrolidone (K-30) parts by weight based on 100 parts by weight oxide equivalent
[e] Al-AlCl$_3$:sol derived from aluminum digested in aluminum trichloride aqueous solution
[f] Fiber contained about 18 percent organic residue
[g] Carbon content of 16.4 to 17.9 was found by analysis of several samples

## Claims

1. A refractory fiber consisting essentially of a homogeneous mixture of amorphous alumina and amorphous phosphorus pentoxide, the mole ratio of alumina to phosphorus pentoxide being in the range of 10:1 to 2:1, and said fiber being of uniform shape.

2. A fiber according to Claim 1 additionally containing comprising up to 20 weight percent carbon or up to 25 weight percent organic residues based on the total fiber composition.

3. A fiber according to Claim 2 wherein said carbon is derived from polyvinylpyrrolidone.

4. A fiber according to Claim 3 wherein said fiber contains in addition chloride derived from an alumina precursor or HCl.

5. A fiber according to Claim 4 wherein the chloride to polyvinylpyrrolidone mole ratio is in the range of 5.5:1 to 7.5:1.

6. A fiber according to any of Claims 1 to 5 having an alumina/phosphorus mole ratio in the range of 3:1 to 5:1.

7. A fiber according to Claim 6 having a thin skin of thickness 0.1 micrometer or more.

8. A method for preparing a refractory fiber having a homogeneous composition consisting essentially of amorphous alumina and amorphous phosphorus pentoxide, the mole ratio of alumina to phosphorus pentoxide being in the range of 10:1 to 2:1, comprising the steps:

a) preparing a viscous precursor liquid mixture comprising an alumina precursor and a phosphorus pentoxide precursor having an oxide solid content in the range of 25 to 55 weight percent and a viscosity in the range of 10 to 1,000 Pas,

b) shaping said viscous concentrate in a fiber form by drawing or spinning, and

c) evaporatively gelling or hydrolyzing the resultant formed fiber to provide a green fiber comprising said homogeneous composition of alumina and phosphorus pentoxide, and

d) firing said green fiber to a temperature of at most 1000°C and for a time sufficient to provide a fired fiber consisting essentially of a homogeneous mixture of amorphous alumina and amorphous phosphorus pentoxide, said temperature and time being insufficient to provide a polycrystalline fiber.

9. A method according to Claim 8 wherein said alumina precursor liquid is prepared from aluminum metal foil and said aqueous aluminum chloride alumina precursor is aluminum formoacetate.

10. A method according to claim 8 or claim 9 wherein said phosphorus pentoxide precursor liquid is at least one of phosphoric acid, phosphorous acid, or ammonium hypophosphite.

11. A method according to any of Claims 8 to 10 wherein said viscous precursor liquid mixture additionally contains at least one of polyvinylpyrrolidone and a water-soluble metal compound.

12. A textile article or a composite article incorporating a fiber as claimed in any of claims 1 to 7.

9

**Patentansprüche**

1. Feuerfeste Faser, die im wesentlichen aus einem homogenen Gemisch aus amorphem Aluminiumoxid und amorphem Phosphorpentoxid besteht, wobei das Molverhältnis von Aluminiumoxid zu Phosphorpentoxid im Bereich von 10:1 bis 2:1 liegt und die Faser eine einheitliche Form hat.

2. Faser nach Anspruch 1, die zusätzlich auf die Gesamtzusammensetzung der Faser bezogen bis zu 20 Gew.-% Kohlenstoff oder bis zu 25 Gew.-% organische Rückstände enthält.

3. Faser nach Anspruch 2, dadurch gekennzeichnet, daß der Kohlenstoff von Polyvinylpyrrolidon abgeleitet ist.

4. Faser nach Anspruch 3, dadurch gekennzeichnet, daß die Faser zusätzlich ein Chlorid enthält, das von einer Vorstufe des Aluminiumoxids oder von HCl abgeleitet ist.

5. Faser nach Anspruch 4, dadurch gekennzeichnet, daß das Molverhältnis von Chlorid zu Polyvinylpyrrolidon im Bereich von 5,5:1 bis 7,5:1 liegt.

6. Faser nach einem der Ansprüche 1 bis 5 mit einem Molverhältnis von Aluminiumoxid zu Phosphorpentoxid im Bereich von 3:1 bis 5:1.

7. Faser nach Anspruch 6 mit einer dünnen Haut, die eine Dicke von 0,1 µm oder mehr hat.

8. Verfahren zum Herstellen einer feuerfesten Faser, die eine homogene Zusammensetzung im wesentlichen aus amorphen Aluminiumoxid und amorphem Phosphorpentoxid hat, wobei das Molverhältnis von Aluminiumoxid zu Phosphorpentoxid im Bereich von 10:1 bis 2:1 liegt, mit folgenden Schritten:

a) es wird als viskoses flüssiges Vorstufengemisch hergestellt, das eine Vorstufe des Aluminiumoxids und eine Vorstufe des Phosphorpentoxids enthält und dessen Gehalt an festem Oxid im Bereich von 25 bis 55 Gew.-% und dessen Viskosität im Bereich von 10 bis 1000 Pa.s beträgt.

b) das genannte viskose Konzentrat wird durch Ziehen oder Spinnen zu einer Faser verformt und

c) durch verdampfendes Gelieren oder Hydrolysieren der so erhaltenen, geformten Faser wird eine grüne Faser hergestellt, die mindestens teilweise aus der genannten homogenen Zusammensetzung von Aluminiumoxid und Phosphorpentoxid besteht, und

d) die grüne Faser wird bei einer Temperatur von höchstens 1000°C während einer so langen Zeit gebrannt, daß eine gebrannte Faser erhalten wird, die im wesentlichen aus einem homogenen Gemisch aus amorphem Aluminiumoxid und amorphem Phosphorpentoxid besteht, wobei die genannte Temperatur und die genannte Zeit nicht so hoch bzw. lang sind, daß eine polykristalline Faser gebildet wird.

9. Verfahren nach Anspruch 8, dadurch gekennzeichnet, daß die flüssige Vorstufe des Aluminiumoxids aus Aluminiummetallfolie hergestellt wird und daß Vorstufe des Aluminiumoxids wäßriges Aluminiumformoacetat ist.

10. Verfahren nach Anspruch 8 oder 9, dadurch gekennzeichnet, daß die flüssige Vorstufe des Phosphorpentoxids mindestens eine der Substanzen Phosphorsäure, phosphorige Säure und Ammoniumhypophosphit ist.

11. Verfahren nach einem der Ansprüche 8 bis 10, dadurch gekennzeichnet, daß das viskose flüssige Vorstufengemisch zusätzlich mindestens eine der Substanzen enthält, die aus Polyvinylpyrrolidon und einer wasserlöslichen Metallverbindung bestehen.

12. Textilartikel oder Verbundgegenstand mit einer Faser nach einem der Ansprüche 1 bis 7.

**Revendications**

1. Fibre réfractaire, constituée essentiellement d'un mélange homogène d'alumine amorphe et de pentoxyde de phosphore amorphe, le rapport en moles de l'alumine au pentoxyde de phosphore étant compris entre 10:1 et 2:1, ladite fibre ayant une forme uniforme.

2. Fibre selon la revendication 1, contenant en outre jusqu'à 20% en poids de carbone ou jusqu'à 25% en poids de résidus organiques, par rapport à la composition fibreuse totale.

3. Fibre selon la revendication 2, dans laquelle ledit carbone dérive de la polyvinylpyrrolidone.

4. Fibre selon la revendication 3, dans laquelle ladite fibre contient en outre un chlorure dérivant d'un précurseur de l'alumine ou de HCl.

5. Fibre selon la revendication 4, dans laquelle le rapport en moles du chlorure à la polyvinylpyrrolidone est compris entre 5,5:1 et 7,5:1.

6. Fibre selon l'une quelconque des revendications 1 à 5, présentant un rapport en moles alumine/phosphore compris entre 3:1 et 5:1.

7. Fibre selon la revendication 6, ayant une peau mince d'épaisseur 0,1 µm ou plus.

8. Procédé pour la préparation d'une fibre réfractaire ayant une composition homogène, constituée essentiellement d'alumine amorphe et de pentoxyde de phosphore amorphe, le rapport en moles de l'alumine au pentoxyde de phosphore étant compris entre 10:1 et 2:1, ledit procédé comprenant les étapes consistant:

a) à préparer un mélange liquide précurseur visqueux, comprenant un précurseur de l'alumine et un précurseur du pentoxyde de phosphore, ayant une teneur en extrait sec d'oxyde comprise entre 20 et 55% en poids et une viscosité de 10 à 1000 Pa.s,

b) à façonner ledit concentré visqueux pour lui donner une forme d'une fibreuse, par étirage ou filtage, et

c) à gélifier ou hydrolyser, par évaporation, la fibre ainsi obtenue, pour donner une fibre verte comprenant ladite composition homogène d'alumine et de pentoxyde de phosphore, et

d) à cuire ladite fibre verte à une température d'au plus 1000°C et pendant un temps suffisant pour donner une fibre cuite constituée essentiellement d'un mélange homogène d'alumine amorphe et de pentoxyde de phosphore amorphe, ladite température et ledit temps étant insuffisants pour donner une fibre polycristalline.

9. Procédé selon la revendication 8, dans lequel ledit liquide précurseur de l'alumine est préparé à partir d'une feuille d'aluminium métallique, et ledit précurseur de l'alumine, en solution aqueuse de chlorure d'aluminium, est le formoacétate d'aluminium.

10. Procédé selon la revendication 8 ou la revendication 9, dans lequel ledit liquide précurseur du pentoxyde de phosphore est au moins l'acide phosphorique, l'acide phosphoreux ou l'hypophosphite d'ammonium.

11. Procédé selon l'une quelconque des revendications 8 à 10, dans lequel ledit mélange liquide précurseur visqueux contient en outre au moins de la polyvinylpyrrolidone ou un composé métallique soluble dans l'eau.

12. Article textile ou article composite comprenant une fibre selon l'une quelconque des revendications 1 à 7.